## Europäisches Patentamt

## European Patent Office

## Office européen des brevets

(19)

(11) Numéro de publication: **0 227 535**
**B1**

(12) **FASCICULE DE BREVET EUROPÉEN**

(45) Date de publication du fascicule du brevet:
21.03.90

(51) Int. Cl. ⁵: **B 23 P 19/02**

(21) Numéro de dépôt: **86402687.7**

(22) Date de dépôt: **03.12.86**

(54) **Procédé et dispositif d'extraction d'un tronfon de tube d'échangeur de chaleur.**

(30) Priorité: **18.12.85 FR 8518784**

(43) Date de publication de la demande:
**01.07.87 Bulletin 87/27**

(45) Mention de la délivrance du brevet:
**21.03.90 Bulletin 90/12**

(84) Etats contractants désignés:
**BE CH DE ES GB IT LI SE**

(56) Documents cité:
**EP-A-0 163 088**
**EP-A-0 186 489**
**US-E-30 802**

(73) Titulaire: **FRAMATOME**
**Tour Fiat 1, Place de la Coupole**
**F-92400 Courbevoie (FR)**

(72) Inventeur: **Jacquier, Paul**
**37 Chemin des Bruyères**
**F-69160 - Tassin la Demi Lune (FR)**

(74) Mandataire: **Polus, Camille**
**c/o Cabinet Lavoix 2, Place d'Estienne d'Orves**
**F-75441 Paris Cedex 09 (FR)**

## Description

L'invention concerne un procédé pour extraire un tronçon de tube d'échangeur, d'une plaque tubulaire en particulier pour effectuer l'examen d'une zone de ce tube, selon le préambule de la revendication 1.

Les échangeurs de chaleur tels que les générateurs de vapeur des réacteurs nucléaires à eau sous pression comportent généralement une plaque tubulaire de grande épaisseur traversée par des tubes qui affleurent sur une face de cette plaque tubulaire constituant sa face d'entrée et qui sont saillants de l'autre côté de la plaque tubulaire dont la face de sortie est en contact avec l'intérieur du générateur de vapeur recevant l'eau d'alimentation à vaporiser. La face d'entrée de la plaque tubulaire débouche dans le volume interne d'une boîte à eau en deux parties assurant la distribution et la récupération de l'eau sous pression circulant dans les tubes et transportant la chaleur d'échauffement et de vaporisation de l'eau d'alimentation. Chacun des tubes du générateur de vapeur cintré à sa partie supérieure présente une extrémité débouchant dans une partie de la boîte à eau et son autre extrémité débouchant dans l'autre partie de cette boîte à eau.

Les tubes du générateur de vapeur constituant un faisceau sont sertis à l'intérieur de trous de diamètre approprié traversant la plaque tubulaire, pratiquement sur toute l'épaisseur de cette plaque. Le sertissage des tubes dans la plaque tubulaire consiste à laminer leur paroi contre la paroi des trous de la plaque, si bien qu'il existe du côté de la face de sortie de la plaque tubulaire, dans la paroi de chacun des tubes, une zone de transition entre la partie déformée et la partie non déformée du tube. On réduit généralement les contraintes dans cette zone de transition du tube en effectuant, après sertissage, une légère expansion diamétrale du tube dans la zone de transition. Il subsiste malgré tout une concentration de contraintes relativement fortes dans cette zone du tube qui est en conséquence soumis à une corrosion locale accrue, aussi bien depuis sa surface interne en contact avec l'eau sous pression que depuis sa surface externe en contact avec l'eau d'alimentation.

Lorsqu'on effectue l'entretien des générateurs de vapeur d'un réacteur nucléaire, ce réacteur étant à l'arrêt, il est nécessaire d'effectuer des contrôles des tubes, en particulier pour déterminer leur tenue à la corrosion dans la zone de transition, a près un certain temps de service. Ces contrôles peuvent nécessiter l'extraction d'une portion de tube entourant la zone de transition.

Cette extraction n'a d'intérêt que si elle peut être réalisée sans déformation et sans modification de l'état de surface du tube, dans la zone à examiner.

On à proposé des procédés et dispositifs permettant l'extraction d'un tube serti dans une plaque tubulaire, soit par arrachage mécanique, soit par rétreint du tube obtenu par un chauffage ou par un ultrarefroidissement.

Dans le cas d'un arrachage mécanique, l'extracteur produit des traces et marques sur les surfaces intérieure et extérieure du tube et dans le cas d'un rétreint par des moyens thermiques, le tube subit des changements de phase métallurgique et d'état de surface. Dans les deux cas, la portion du tube à examiner à subi une modification qui rend incertains les résultats de l'expertise.

Le brevet FR-A-2 452 352 décrit un dispositif permettant d'extraire les tubes par arrachage mécanique qui comporte une douille fendue et une olive pour écarter diamétralement les différentes parties de la douille. Cette douille comporte des dents sur sa surfacerieure qui viennent s'incruster dans la partie intérieure du tube.

Le brevet FR-A-2 220 326 décrit un dispositif d'expansion venant se loger à l'intérieur du tube qui comporte un ensemble de manchons élastiques séparés par des bagues rigides. Une âme coulissante interne reliée au manchon extrême supérieur provoque l'expansion des manchons élastiques, par déplacement axial sous l'effet d'une traction. On assure ainsi un accrochage du dispositif sur lequel on exerce ensuite une traction pour effectuer l'arrachage du tube.

Le brevet FR-A-2 491 249 décrit un dispositif complexe permettant d'effectuer la découpe, le retrait et le tronçonnage d'un tube de générateur de vapeur. Ce dispositif comporte une douille fendue munie de dents d'accrochage.

Ces dispositifs de l'art antérieur qui assurent un arrachage mécanique du tube produisent des marques sur les surfaces intérieure et extérieure du tube et sont généralement d'une structure complexe.

Le but de l'inventione est donc de proposer un procédé pour extraire un tronçon de tube d'échangeur de chaleur à examiner, d'une plaque tubulaire dans laquelle le tube est fixé par sertissage de façon qu'il affleure sur une face de la plaque tubulaire constituant sa face d'entrée et qu'il soit saillant par rapport à l'autre face ou face de sortie de la plaque tubulaire qui est en contact avec l'intérieur du générateur de vapeur, le tronçon de tube à extraire, préalablement séparé du reste du tube par découpage comportant au moins une zone de transition entre la partie laminée lors du sertissageet la partie non laminée du tube, qui se trouve au voisinage de la face de sortie de la plaque tubulaire et sur la quelle on effectue un examen après l'extraction, ce procédé pouvant être mis en oeuvre par un appareil d'une grande simplicité et d'une grande facilité d'utilisation et permettant la récupération d'un tronçon de tube dans un état non modifié, au moins dans la zone à examiner.

Dans ce but:

– on introduit un manchon à l'intérieur du tube, depuis la face de la plaque tubulaire sur laquelle le tube affleure et sur une longueur telle que le manchon recouvre le tube sur toute la traversée de la plaque tubulaire et sur toute la zone à examiner,

- on réalise la jonction entre le tube et le manchon, dans deux zones situées de part et d'autre de la zone à examiner, grâce à un liant assurant une liaison de grande résistance mécanique introduit entre la surface intérieure du tube et la surface extérieure du manchon,

- et on exerce une traction axiale sur le manchon depuis la face de la plaque tubulaire sur laquelle le tube affleure, pour extraire le tronçon de tube de la plaque tubulaire.

L'invention est également relative à un dispositif de structure simple permettant la mise en oeuvre du procédé, selon le préambule de la revendication 8.

Afin de bien faire comprendre l'invention, on va maintenant décrire, à titre d'exemples non limitatifs, en se référant aux figures jointes en annexe, plusieurs modes particuliers de réalisation d'un dispositif permettant la mise en oeuvre du procédé d'extraction suivant l'invention, dans le cas d'un tube d'un générateur de vapeur d'un réacteur nucléaire à eau sous pression.

- La figure 1 est une vue en coupe axiale de la partie d'un tube de générateur de vapeur traversant la plaque tubulaire, à l'intérieur duquel on à introduit un dispositif d'injection de liant permettant de réaliser la fixation d'un manchon dans le tube.
- La figure 1a est une vue en coupe axiale du dispositif d'injection de liant.
- Les figures 2a et 2b sont des vues en coupe axiale montrant un second mode de réalisation d'un dispositif permettant de réaliser la jonction entre un manchon et un tube à extraire.
- Les figures 3a et 3b sont des vues en coupe axiale montrant un troisième mode de réalisation d'un dispositif permettant de réaliser la jonction entre un manchon et un tube à extraire.
- La figure 4 est une vue en coupe axiale d'un dispositif permettant d'exercer une traction sur un manchon rendu solidaire d'un tube de générateur de vapeur.
- La figure 4a est une vue à plus grande échelle du détail A de la figure 4.
- La figure 5 est une vue en coupe axiale d'une variante de réalisation d'un dispositif de traction.
- Les figures 6a, 6b, 6c, 6d, 6e et 6f sont des vues en coupe axiale du dispositif de traction représenté sur la figure 5, dans différentes positions, pendant une opération d'extraction d'un tube.

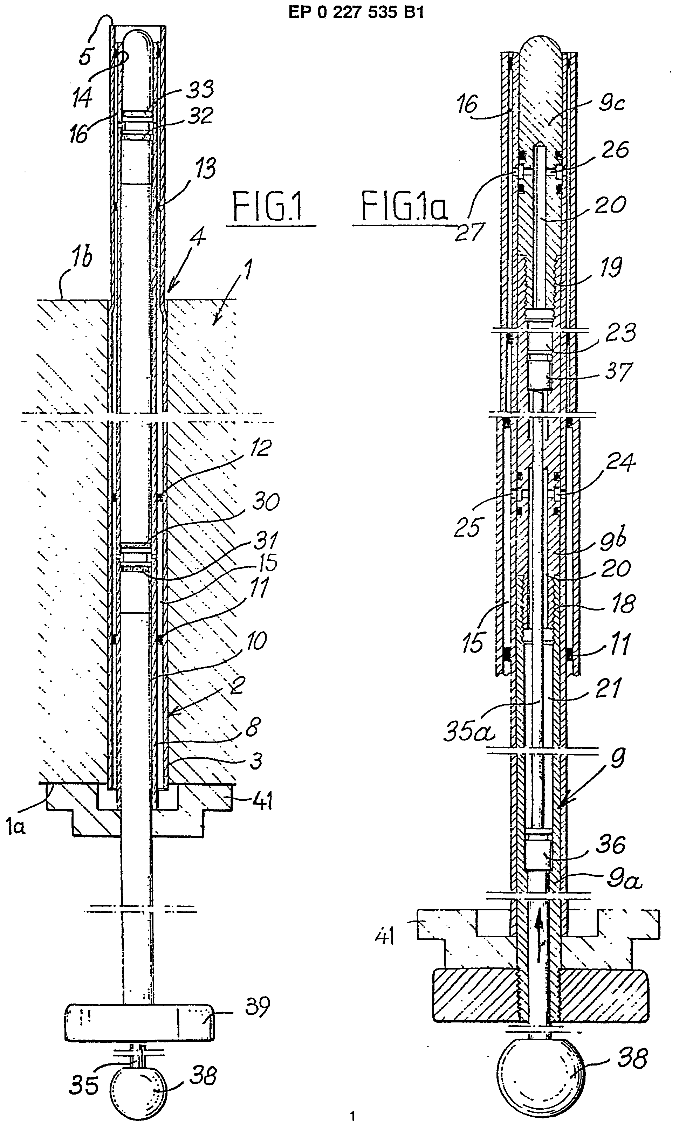

Sur les figures 1 et 1a, on voit une partie de la plaque tubulaire 1 d'un générateur de vapeur, au niveau d'un trou 2 la traversant de part en part et permettant le passage d'un tube 3. Le tube 3 est fixé à l'intérieur du trou 2 par sertissage ou dudgeonnage, ses parois étant laminées à l'intérieur du trou 2. Le tube 3 est fixé dans le trou 2 de façon que son extrémité affleure pratiquement sur la face d'entrée 1a de la plaque tubulaire. En revanche, le tube est saillant par rapport à la face de sortie 1b de cette plaque. La zone de transition 4 entre la partie laminée et la partie non laminée du tube, au cours du dudgeonnage, se trouve au voisinage de la face de sortie 1b. Dans cette zone, des produits de corrosion peuvent s'accumuler et la concentration des contraintes dans la paroi du tube favorise la corrosion.

Après un certain temps d'utilisation du générateur de vapeur, il peut s'avérer nécessaire d'extraire le tube 3 de la plaque tubulaire 1, en particulier pour examiner les traces de corrosion dans la zone de transition 4.

Pendant un arrêt pour entretien du réacteur nucléaire, la partie inférieure du tube 3 représentée sur la figure 1 est séparée du reste du tube par une découpe 5 effectuée depuis l'intérieur du tube par un outillage de type connu introduit à l'intérieur du tube par la boîte à eau du générateur de vapeur se trouvant sous la face 1a de la plaque tubulaire.

Une première étape du procédé suivant l'invention consiste à rendre solidaire un manchon 8 introduit dans le tube, de la surface intérieure de ce tube.

Pour cela, un ensemble d'injection de liant 10 qui sera décrit ci-après est placé à l'intérieur du manchon 8 qui est lui-même introduit à l'intérieur du tube 3, depuis la face 1a de la plaque tubulaire sur laquelle affleure le tube 3.

Le manchon 8 présente un diamètre extérieur un peu inférieur au diamètre intérieur du tube 3 et une longueur sensiblement supérieure à l'épaisseur de la plaque tubulaire 1.

Comme il est visible sur les figures 1 et 1a, le manchon 8 comporte des logements annulaires dans sa surface externe dans lesquels sont introduits des joints d'étanchéité 11, 12, 13 et 14. Ces joints ont un diamètre extérieur tel qu'ils assurent une certaine étanchéité entre la surface extérieure du manchon 8 et la surface intérieure du tube 3.

Les joints 11 et 12 d'une part et les joints 13 et 14 d'autre part sont groupés suivant la longueur du manchon 8, de façon à délimiter deux zones annulaires fermées 15, 16 situées l'une à l'intérieur de la plaque tubulaire 1 et l'autre un peu au-dessus de la face 1b de cette plaque tubulaire, lorsque le manchon 8 et le dispositif d'injection 10 sont introduits dans le tube 3 comme représenté sur la figure 1.

Le dispositif d'injection 10 est constitué par un corps 9 en trois parties 9a, 9b et 9c, la partie intermédiaire 9b étant fixée sur la partie inférieure 9a grâce à un filetage 18 et la partie supérieure 9c étant fixée sur la partie intermédiaire 9b par l'intermédiaire d'un filetage 19.

Le corps 9 du dispositif d'injection comporte un canal central 20 de direction axiale comportant deux parties 21 et 23 élargies diamétralement et constituant des chambres d'injection qui sont remplies initialement d'un liant apte à assurer la solidarisation entre le manchon 8 et le tube 3.

La partie intermédiaire 9b du corps 9 du dispositif d'injection comporte d'autre part des perçages radiaux 24 sur toute son épaisseur disposés en face de perçages 25 traversant la paroi du manchon 8 sur toute son épaisseur. Le canal 20 est ainsi mis en communication avec l'espace annulaire 15 lorsque le dispositif est mis en place dans le tube 3.

De la même façon, la partie supérieure 9c du corps 9 comporte des perçages radiaux 26 sur toute son épaisseur disposés en face de perçages 27 traversant l'épaisseur du manchon 8. Le canal 20 dans sa partie supérieure est donc mis en communication avec l'espace annulaire 16 compris entre les joints 13 et 14.

La partie intermédiaire 9b du corps 9 est d'autre part usinée au niveau des perçages 24 pour constituer une chambre annulaire qui est fermée de part et d'autre par des joints 30 et 31 respectivement.

De la même façon, la partie supérieure 9c du corps 9 est usinée au niveau des perçages radiaux 26 pour constituer une chambre annulaire fermée de part et d'autre par des joints annulaires 32 et 33, respectivement.

Une tige de manoeuvre 35 est montée de façon coulissante à l'intérieur du canal central 20 de direction axiale et comporte des parties élargies 36 et 37 disposées à l'intérieur des chambres d'injection 21 et 23 respectivement et reliées par la partie centrale 35a de la tige ces parties élargies 36 et 37 ont un diamètre correspondant au diamètre intérieur des chambres 21 et 23 de façon que ces parties élargies 36 et 37 constituent les pistons d'injection d'une seringue double manoeuvrée par la tige 35.

Une boule de manoeuvre 38 est fixée à l'extrémité de la tige 35 pour permettre la manoeuvre de cette tige permettant l'injection. Un disque de fixation 39 solidaire de la partie inférieure de la seringue permet le maintien stable de celle-ci à l'intérieur de la boîte à eau contre la plaque tubulaire du générateur de vapeur avec interposition d'une pièce d'appui 41 comportant une ouverture de passage pour le dispositif d'injection 10. La pièce d'appui 41 et le disque 39 peuvent être maintenus manuellement ou par un bras de manutention contre la plaque tubulaire.

Le dispositif d'injection 10 est engagé librement dans le manchon 8 et le maintien du disque 39 permet d'éviter sa rotation et d'autoriser les mouvements de la tige 35 pour l'injection du liant.

Lorsque le dispositif d'injection 10 et le manchon 8 sont en position dans le tube 3, comme représenté sur la figure 1, on effectue l'injection de liant dans les espaces annulaires 15 et 16 en poussant la tige 35 vers le haut, dans le sens de la flèche 40. Les pistons 36 et 37 assurent alors l'injection du liant dans les chambres annulaires situées entre les joints 30 et 31 d'une part et 32 et 33 d'autre part, par les perçages radiaux 24 et 26, puis dans les espaces annulaires 15 et 16, par les perçages 25 et 27 du mandrin. Les espaces annulaires 15 et 16 ménagés entre le manchon 8 et la surface intérieure du tube 3 sont de très faible épaisseur et le liant injecté est constitué par une colle dont la prise a lieu dès qu'elle se trouve mise sous la forme d'une couche de faible épaisseur. La colle subit assez rapidement un début de prise dans les espaces 15 et 16, si bien qu'il faut effectuer le retrait du dispositif d'injection 10 assez rapidement pour éviter qu'il ne soit bloqué à l'intérieur du manchon et du tube. On effectue ce retrait en maintenant la pièce d'appui 41 contre la plaque tubulaire et en exerçant une traction sur le disque 39 solidaire du dispositif d'injection 10. On pourrait également attendre un début de prise du liant pour que le manchon 8 se trouve maintenu à l'intérieur du tube 3, avec une force de liaison suffisante pour qu'on puisse extraire le dispositif 10 de ce manchon, depuis la boîte à eau.

On attend ensuite la prise définitive du liant pour relier l'extrémité inférieure du manchon 8 saillante par rapport à la face d'entrée 1a de la plaque tubulaire à un extracteur permettant d'exercer une traction suffisante pour assurer l'arrachage du tube.

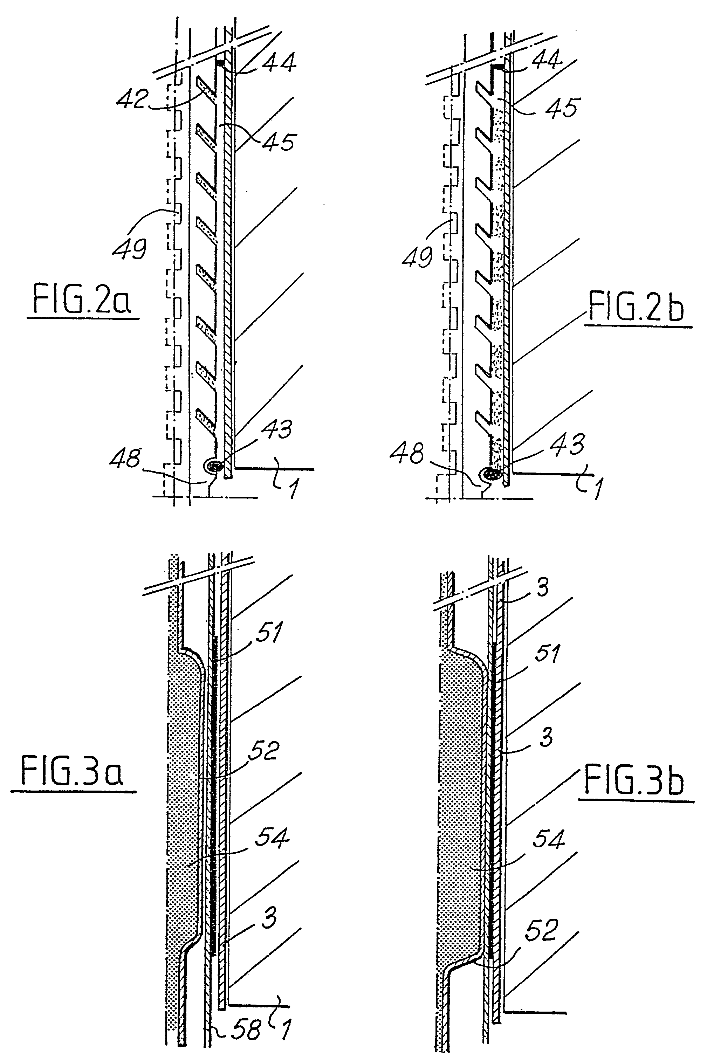

Sur les figures 2a et 2b, on voit un second mode de réalisation de la première étape du procédé d'extraction suivant l'invention.

Une pièce cylindrique 48 d'un diamètre un peu inférieur au diamètre intérieur du tube 3 est introduite dans celui-ci avec interposition de joints tels que 43 et 44 délimitant un espace annulaire 45 fermé entre la pièce 48 et le tube 3.

Il est bien évident que deux zones telles que 45 sont ménagées comme précédemment à l'intérieur du tube 3, l'une à l'intérieur de la plaque tubulaire 1 comme représenté sur les figures 2a et 2b et l'autre, non représentée, dans la partie saillante du tube 3, au-delà de la face de sortie de la plaque tubulaire 1. Comme précédemment, ces deux zones entourent la zone de transition du tube 3 serti dans la plaque tubulaire 1.

La pièce cylindrique 48 qui joue le rôle du manchon 8 du premier mode de réalisation comporte des gorges 42 de direction oblique dirigée vers le bas remplies de liant. Une résistance de chauffage 49 est disposée à l'intérieur de la pièce 48, approximativement suivant son axe.

Lorsqu'on fait passer un courant électrique dans la résistance 49, ce courant produit par effet Joule un échauffement de la pièce 48 suffisant pour provoquer la fusion du liant et son écoulement dans l'espace 45. Le liant remplit par capillarité les différentes sections de l'espace 45 et se solidifie dans cet espace en assurant une liaison de grande résistance mécanique entre la pièce 48 et le tube 3.

Une traction exercée sur la pièce 48 permet ensuite l'extraction du tube 3 de la plaque tubulaire 1.

Sur les figures 3a et 3b, on voit un troisième mode de réalisation de la première étape du procédé consistant à assurer la solidarisation d'un manchon 58 avec le tube 3 du générateur de vapeur traversant la plaque tubulaire 1.

Le manchon 58 comportant une couche mince de liant 51 est introduit dans le tube 3 comme précédemment.

Le manchon 58 comporte une couche de liant 51 dans deux zones qui viennent se placer, pour l'une à l'intérieur de la plaque tubulaire et pour l'autre légèrement au-dessus de la face de sortie de la plaque tubulaire, à l'intérieur du tube 3. Une enveloppe souple 52 est introduite à l'intérieur du manchon 58 cette enveloppe 52 comporte deux renflement s qui viennent se placer chacun en face d'une zone du mandrin 58 comportant extérieurement une couche de liant 51, lorsque l'enveloppe 52 est mise en place dans le manchon 58.

Un fluide sous pression 54 est introduit dans l'enveloppe 52 qui subit ainsi une dilatation au niveau de chacun des renflements. Le manchon 58 est ainsi appliqué contre le tube 3, dans chacune des zones où il est revêtu de liant 51. Cette application de pression sur le liant entraîne un collage de grande résistance entre le manchon 58 et le tube 3.

Comme précédemment, une traction sur le manchon 58 permettra l'extraction du tube.

Il est à remarquer que dans tous les cas, la traction sur l'extrémité du manchon est transmise au tube 3 dans deux zones situées de part et d'autre de la zone de transition 4 dont on désire effectuer l'examen à près l'extraction du tube. Cette zone ne subit ainsi aucune contrainte pendant l'extraction, les forces étant transmises au tube par le manchon, de part et d'autre de la zone à examiner. On à ainsi un effet de pontage qui permet d'éviter toute déformation de la zone sur laquelle on fera porter l'examen.

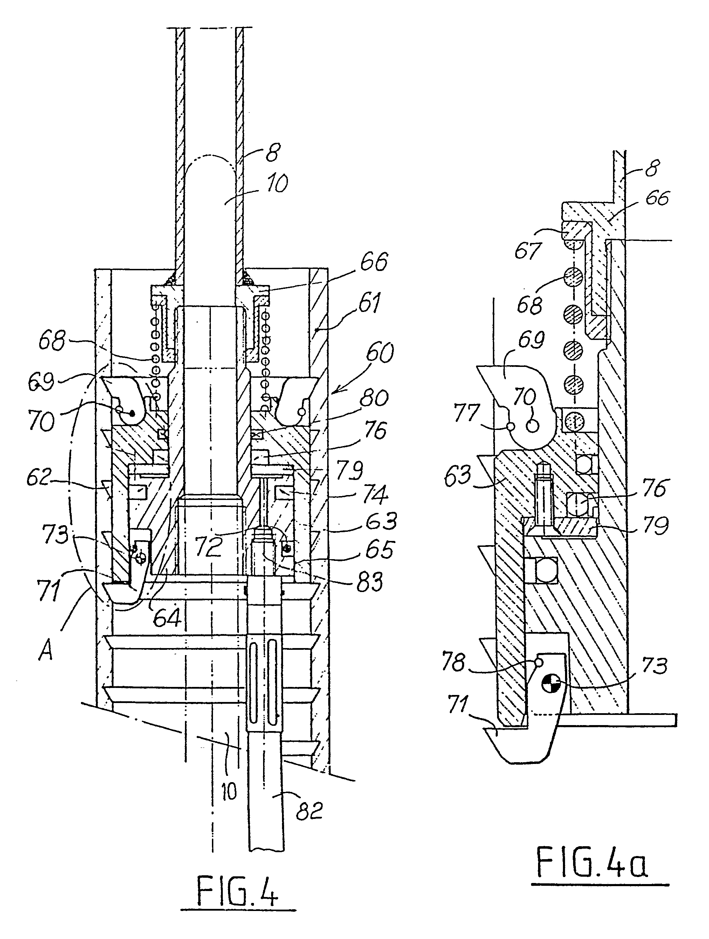

Sur les figures 4 et 4a, on voit un dispositif d'extraction désigné de façon générale par le repère 60 permettant d'exercer une traction sur le manchon 8, après que celui-ci ait été fixé à l'intérieur d'un tube traversant une plaque tubulaire, grâce à un liant à forte résistance mécanique.

Ce dispositif d'extraction comporte une chemise externe cylindrique 61 sur la paroi interne de laquelle ont été usinées des gorges 62 à intervalles réguliers dans la direction axiale. Un corps 63 est monté à l'intérieur de l'enveloppe 61 et comporte un alésage central 65 constituant une chambre pour le piston d'extraction 64 mobile suivant la direction axiale de l'extracteur. Le piston 64 réalisé sous forme tubulaire est vis se à sa partie supérieure dans une pièce de liaison 66 sur laquelle est soudé le manchon 8. Une pièce annulaire 67 vissée sur l'extrémité du piston 64 sert de pièce d'appui à un ressort hélicoïdal 68 venant en appui sur la partie supérieure du corps 63. Des cliquets 69 sont montés articulés autour d'axes 70 sur le corps 63, à sa partie supérieure. L'extrémité des cliquets 69 à une forme permettant leur engagement dans les gorges 62. Des cliquets 71 sont également montés articulés autour d'axes 73 à la partie inférieure du piston 64. Les cliquets 71 ont également une forme permettant leur engagement dans les gorges 62. Des ressorts de rappel 77 et 78 permettent d'exercer une force de rappel sur les cliquets 69 et 71 respectivement pour permettre leur engagement dans les gorges 62.

Un ensemble de joints segments 74, 76 et 80 permettent d'assurer une étanchéité entre l'alésage du corps 63 et le piston 64. Une rondelle en élastomère 79 maintenue par des vis dans le corps 63 permet le montage et le maintien du joint segment 76. La chambre du piston 64 est alimentée en fluide hydraulique par l'intermédiaire d'une conduite souple 82 passant à l'intérieur de l'enveloppe cylindrique 61 et d'un canal 83 traversant le piston 64.

Sur la figure 4, on à représenté en traits interrompus le dispositif 10 d'injection de liant tel que décrit en se référant aux figures 1 et 1a, dans sa position d'introduction ou d'extraction dans le manchon 8, à travers le dispositif extracteur 60. En utilisant ce dispositif extracteur, il est donc possible d'introduire le manchon 8 dans le tube à extraire, ce manchon 8 étant solidaire de l'extracteur 60. Le dispositif d'injection 10, préalablement introduit dans le manchon 8 est alors en place pour réaliser la liaison entre le manchon et le tube. On effectue ensuite le retrait du dispositif 10. Le dispositif extracteur 60 est utilisé pour l'extraction pas à pas du tube, comme il sera décrit plus loin, après la prise définitive du liant.

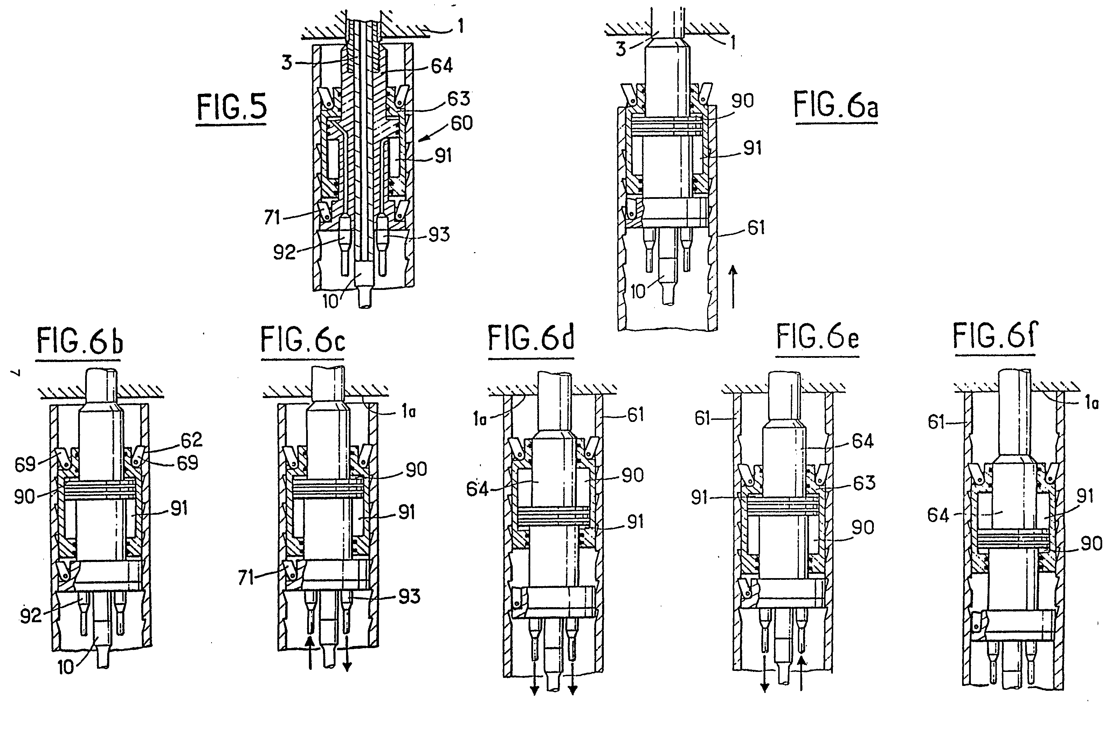

Sur la figure 5, on voit une variante de réalisation du dispositif d'extraction 60 qui vient d'être décrit, les éléments correspondants des dispositifs d'extraction représentés sur les figures 4 et 5 portant les mêmes repères. Les différences entre les deux dispositifs portent uniquement sur le fait que les cliquets inférieurs 71 montés sur le piston 64 ont des formes différentes dans les deux modes de réalisation et que dans le second mode de réalisation, le déplacement du piston 64 est assuré dans les deux sens par l'admission d'un fluide hydraulique sous pression. Le corps 63 délimite en conséquence avec le pis ton 64 deux chambres 90 et 91 alimentées respectivement par des conduites 92 et 93 en fluide hydraulique sous pression.

Sur les figures 6a à 6f, on à représenté le dispositif 60 selon le second mode de réalisation, dans ses différentes positions permettant l'extraction d'un tube 3 d'une plaque tubulure 1.

Le tube 3 à été préalablement découpé au-dessus de la face de sortie de la plaque tubulaire 1 et le manchon 8 solidaire de l'extracteur 60 à été solidarisé au tube 3 grâce à un liant, le collage étant assuré grâce à un dispositif 95 représenté de façon schématique, introduit par l'alésage central du dispositif 60.

Il est bien évident que le fonctionnement qui va être décrit relativement au dispositif représenté sur la figure 5 est transposable au dispositif d'extraction 60 représenté sur la figure 4, pour lequel le déplacement du corps 63 est assuré par le ressort 68 et non par injection d'un fluide hydraulique dans la chambre 90 du vérin à double effet constitué par le corps 63 et le pis ton 64 comme dans le second mode de réalisation.

Sur la figure 6a, on à représenté le dispositif dans la phase initiale de l'extraction où l'on réalise la mise en place de la chemise externe 61. La chambre 91 est alimentée en fluide sous pression, si bien que le corps 63 et le piston 64 sont maintenus dans leur position relative indiquée sur la figure. Le coulissement de la chemise 61 est assuré grâce au montage élastique des cliquets, jusqu'au moment où les cliquets supérieurs 69 viennent s'engager dans la gorge supérieure 62 (figure 6b).

On met alors la chambre 91 du vérin à l'atmosphère par l'intermédiaire de la conduite 93, la chambre 90 étant alors alimentée en fluide hydraulique par l'intermédiaire de la conduite 92 (figures 6c et 6d). Il en résulte tout d'abord une mise en appui de la chemise cylindrique 61 contre la face inférieure 1a de la plaque tubulaire et une reprise des différents jeux de montage du dispositif.

Le dispositif est alors totalement rigide et réalise l'extraction du tube 3 par traction sur le manchon 8 comme représenté sur la figure 6d. L'appui sur la plaque tubulaire est alors assuré par les cliquets supérieurs 69 et la chemise 61. Le piston 64 se déplace d'un pas en réalisant l'extraction du tube 3 sur une longueur correspondante.

On intervertit alors les sens d'alimentation des chambres 90 et 91, la chambre 90 étant alimentée en fluide hydraulique et la chambre 91 mise à l'atmosphère (figure 6e).

Lors de la descente du piston 64 pour l'extraction du tube, les cliquets inférieurs 71 s'étaient désengagés de la gorge 62 correspondante pour venir se positionner dans la gorge située un pas en-dessous. L'alimentation de la chambre 90 ne permet donc pas la remontée du piston 64 qui est bloqué en position par rapport à la chemise 61. Le corps 63 est donc déplacé vers le bas sur une distance d'un pas, si bien que ses cliquets 69 viennent s'engager dans la seconde gorge 62, à partir du haut, de la chemise 61.

On intervertit alors le sens d'alimentation des chambres 90 et 91 et la chemise 61 se met en appui sur la face 1a de la plaque tubulaire. Le dispositif est alors prêt pour un second pas d'extraction comme il est visible sur la figure 6f. L'extraction se poursuit ainsi pas par pas, jusqu'à la récupération de l'ensemble du tube 3. Il est à remarquer que pendant l'extraction du tube, la traction exercée sur le manchon est transmise au tube suivant les deux zones où la liaison est assurée, de part et d'autre de la zone de transition du tube 3. On évite ainsi, par effet depontage, toute déformation de la zone du tube à examiner.

Il apparaît donc que le procédé et le dispositif suivant l'invention grâce à leur grande simplicité de mise en oeuvre permettent d'assurer l'extraction du tube, par une opération simple et d'une grande sûreté.

L'invention ne se limite pas aux modes de réalisation qui ont été décrits.

Elle englobe toutes les variantes de nature similaire qui puissent assez facilement être substituées les unes aux autres et à condition qu'elles n'étendent en aucune façon le champ de la protection de l'invention définie dans les revendications indépendantes.

C'est ainsi qu'on peut imaginer l'utilisation d'un liant quelconque pour réaliser la liaison entre le manchon et le tube, ce liant étant cependant de préférence constitué par une colle telle qu'une colle anaérobie dont la prise est assurée dés qu'elle se trouve isolée de l'atmosphère extérieure oxydante, par exemple lors de la mise en contact intime des pièces à joindre. On peut évidemment utiliser d'autres types de colle dont la prise est assurée par élévation de température ou abaissement de température dans le cas de colle thermofusible ou élévation de pression ou encore par la constitution d'une couche mince entre les pièces à joindre.

Il est bien évident également que le mode d'application du liant et de réalisation de la prise peuvent être différents de ceux qui ont été décrits. En particulier, le liant peut être aussi bien introduit par injection entre le manchon et le tube que déposé sur la surface extérieure du manchon, préalablement à l'introduction du manchon dans le tube.

Le manchon peut être remplacé par un cylindre plein dans le cas où le liant est préalablement déposé sur sa surface externe.

On notera toutefois que l'utilisation d'un manchon creux ayant un diamètre intérieur suffisant pour assurer, après sa mise en place, le passage d'outils devant intervenir au-delà de son extrémité supérieure sur le tube, représente un mode de réalisation préférentiel.

L'extracteur peut être mis en place et solidarisé au manchon après sa liaison au tube ou au contraire préalablement fixé au manchon qui est ensuite solidarisé au tube. Dans le cas où l'on réalise l'injection d'un liant, cette injection peut être réalisée par un dispositif différent d'une seringue telle que décrite.

L'extracteur peut être d'un type quelconque actionné par des moyens mécaniques ou hydrauliques il peut réaliser l'extraction pas par pas ou au contraire de façon continue.

Enfin, le procédé et le dispositif suivant l'invention s'appliquent non seulement à l'extraction de tubes de générateur de vapeur d'un réacteur nucléaire à eau sous pression mais encore à l'extraction de tout tube d'un échangeur de chaleur comportant une plaque tubulaire, dans le but d'examiner une portion de ce tube.

**Revendications**

1. Procédé pour extraire un tronçon de tube (3) d'échangeur de chaleur à examiner, d'une plaque tubulaire (1) dans laquelle le tube est fixé par sertissage de façon qu'il affleure sur une face (1a) de la plaque tubulaire constituant sa face d'entrée et qu'il soit saillant par rapport à l'autre face (1b) ou face de sortie de la plaque tubulaire qui est en contact avec l'intérieur du générateur de vapeur, le tronçon de tube (3) à extraire, préalablement séparé du reste du tube par découpage comportant au moins une zone (4) de transition entre la partie laminée lors du sertissage et la partie non laminée du tube, qui se trouve au voisinage de la face de sortie de la plaque tubulaire et sur laquelle on effectue un examen après l'extraction, caractérisé par le fait

- qu'on introduit un manchon (8) à l'intérieur du tube (3), depuis la face (1a) de la plaque tubulaire sur laquelle le tube (3) affleure et sur une longueur telle que le manchon (8) recouvre le tube (3) sur toute la traversée de la plaque tubulaire (1) et sur toute la zone (4) à examiner,
- qu'on réalise la jonction entre le tube 13) et le manchon (8), dans deux zones (15, 16) situées de part et d'autre de la zone (4) à examiner, grâce à un liant assurant une liaison de grande résistance mécanique introduit entre la surface intérieure du tube (3) et la surface extérieure du manchon (8),
- et qu'on exerce une traction axiale sur le manchon (8) depuis la face (1a) de la plaque tubulaire (1) sur laquelle le tube (3) affleure, pour extraire le tronçon de tube (3) de la plaque tubulaire (1)

2. Procédé d'extraction suivant la revendication 1, caractérisé par le fait qu'on injecte le liant après introduction du manchon (8) dans le tube (3), dans les deux zones (15, 16) entre la surface intérieure du tube (3) et la surface extérieure du manchon (8) et qu'on effectue l'extraction du tube (3) par traction sur le manchon (8) après le temps nécessaire à la prise du liant.

3. Procédé d'extraction suivant la revendication 2, caractérisé par le fait qu'on introduit un dispositif d'injection de liant (10) dans le manchon (8), qu'on met en place le manchon (8) dans le tube (3), qu'on injecte le liant grâce au dispositif d'injection (10), qu'on extrait le dispositif d'injection (10) du manchon (8) après un début de prise du liant et qu'on effectue ultérieurement l'extraction du tube après la prise définitive du liant.

4. Procédé d'extraction suivant l'une quelconque des revendications 1, 2 et 3, caractérisé par le fait que le liant est une colle telle qu'une colle anaérobie.

5. Procédé d'extraction suivant la revendication 1, caractérisé par le fait que le liant est déposé sur la surface extérieure du manchon (8), préalablement à son introduction dans le tube (3).

6. Procédé d'extraction suivant la revendication 5, caractérisé par le fait que le liant est disposé dans des cavités (42) ménagées dans la surface externe du manchon (48) et qu'on introduit ce liant entre le tube (3) et le manchon (48) par chauffage de ce manchon (48).

7. Procédé d'extraction suivant la revendication 5, caractérisé par le fait que le liant est appliqué entre le manchon (58) et le tube (3) par une pression exercée depuis l'intérieur sur le manchon (58).

8. Dispositif d'extraction d'un tronçon de tube de chaleur, d'une plaque tubulaire (1) dans laquelle le tube est fixé par sertissage, de façon qu'il affleure sur une face (1a) d'une plaque tubulaire (1) et qu'il soit saillant par rapport à l'autre face (1b), le tronçon de tube à extraire correspondant à une zone de transition entre la partie laminée lors du sertissage et la partie non laminée du tube étant préalablement séparé du reste du tube (3) par découpage, caractérisé par le fait qu'il comporte un manchon (8, 48, 58) d'un diamètre inférieur au diamètre intérieur du tube (3) et d'une longueur supérieure à l'épaisseur de la plaque tubulaire (1), des moyens (10, 42, 49, 51, 52, 54) pour réaliser la jonction grâce à un liant entre le manchon (8) et le tube (3) dans deux zones situées de part et d'autre de la zone de transition du tube et un dispositif d'extraction (60) solidaire d'une des extrémités du manchon (8).

9. Dispositif d'extraction suivant la revendication 8, caractérisé par le fait que le manchon (8) est muni sur sa surface extérieure de joints d'étanchéité (11, 12, 13, 14) et percé d'ouvertures (25, 27) disposées respectivement entre deux joints (11, 12) et (13, 14) et que le dispositif (10) permettant d'assurer la liaison entre le manchon (8) et le tube (3) est un dispositif (10) d'injection de liant comportant des orifices d'injection (24, 26) disposés de façon à venir se placer entre les couples de joints (11, 12 - 13, 14) au niveau des ouvertures (25, 27) du manchon (8) lorsque ce dispositif (10) est introduit dans le manchon, en position des service.

10. Dispositif d'extraction suivant la revendication 9, caractérisé par le fait que le dispositif d'injection (10) comporte un alésage central (20) constituant deux chambres de réserve de liant (21, 23) et communiquant avec les orifices d'injection (24, 26) ainsi qu'une tige (35) montée coulissante dans l'alésage (20) et constituant deux pistons d'injection (36, 37) mobiles à l'intérieur des chambres de réserve de liant (21, 23).

11. Dispositif d'extraction suivant l'une quelconque des revendications 9 et 10, caractérisé par le fait que le moyen d'extraction (60) proprement dit comporte un alésage central d'un diamètre suffisant pour permettre le passage du dispositif d'injection (10).

12. Dispositif d'extraction suivant l'une quelconque des revendications 8 à 11, caractérisé par le fait que le moyen d'extraction proprement dit (60) comporte une chemise externe (61) comportant des gorges (62) régulièrement espacées dans la direction axiale sur sa surface interne et un vérin hydraulique placé à l'intérieur de la chemise (61) et comportant un corps (63) muni de cliquets de blocage (69) dans les gorges (62) de la chemise (61) et un piston (64) solidaire du manchon (8) à l'une de ses extrémités et muni de cliquets de blocage (71) dans les gorges (62) de la chemise (61).

13. Dispositif d'extraction suivant la revendication 12, caractérisé par le fait que le vérin (63, 64) est à simple effet et qu'un ressort (68) est intercalé entre l'extrémité du manchon (8) à laquelle est relié le piston (64) et le corps (63) pour le rappel du corps (63), après chaque extraction d'un pas du tube (3), correspondant à la distance axiale séparant deux gorges (62) successives.

14. Dispositif d'extraction suivant la revendication 12, caractérisé par le fait que le vérin (63, 64) est à double effet, l'alimentation des chambres (90, 91) de ce vérin dans un sens permettant le rappel du corps (63) après l'extraction d'un pas du tube (3).

## Patentansprüche

1. Verfahren zum Herausziehen eines zu untersuchenden Rohrabschnittes (3) eines Wärmetauschers aus einer rohrförmigen Platte (1) in der das Rohr durch Einfalzen oder Versicken derart festgelegt ist, daß es auf einer Seite (1a) der rohrförmigen Platte, die seine Eingangsseite bildet, fluchtet, und es an der anderen Seite (1b) oder Ausgangsseite der rohrförmigen Platte vorspringt, die mit dem Inneren des Dampferzeugers in Kontakt steht, wobei der herauszuziehende Rohrabschnitt (3), der vorher vom Rest des Rohres durch Abtrennen separiert wurde, wenigstens eine Durchgangszone (4) zwischen dem beim Einfalzen oder Versicken gewalzten Bereich und dem nichtgewalzten Bereich des Rohres aufweist, der sich in der Nähe der Ausgangsseite der rohrförmigen Platte befindet und auf die eine Überprüfung nach Herausziehen stattfindet, dadurch gekennzeichnet, daß

- eine Hülse (8) in das Innere des Rohres (3) von der Seite (1a) der rohrförmigen Platte eingeführt wird, mit der das Rohr (3) fluchtet, und auf einer Länge derart, daß die Hülse (8) das Rohr (3) auf dem gesamten Durchgang der rohrförmigen Platte (1) und über die gesamte zu untersuchende Zone (4) bedeckt,
- die Verbindung zwischen dem Rohr (3) und der Hülse (8) in zwei Zonen (15, 16) erzeugt wird, die auf beiden Seiten der zu untersuchenden Zone (4) angeordnet sind, dank eines Verbinders, der eine Verbindung von großem mechanischen Widerstand bietet, der zwischen der Innenfläche des Rohres (3) und der Außenfläche der Hülse (8) eingeführt wird, und
- eine axiale Zugkraft auf die Hülse (8) von der Seite (1a) der rohrförmigen Platte (1) aufgebracht wird, mit der das Rohr (3) fluchtet, um den Abschnitt des Rohres (3) aus der rohrförmigen Platte (1) herauszuziehen.

2. Herausziehverfahren nach Anspruch 1, dadurch gekennzeichnet, daß der Verbinder bzw. das Verbindungsmittel nach Einführen der Hülse (8) in das Rohr (3) in die beiden Zonen (15, 16) zwischen der Innenfläche des Rohres (3) und der Außenfläche der Hülse (8) eingespritzt wird, und daß das Herausziehen des Rohres (3) durch Anziehen an der Hülse (8) nach der notwendigen Zeit für das Wirken bzw. Abbinden des Bindemittels ausgeführt wird.

3. Herausziehverfahren nach Anspruch 2, dadurch gekennzeichnet, daß eine Einspritzvorrichtung des Bindemittels (10) in die Hülse (8) eingeführt wird, daß die Hülse (8) in dem Rohr (3) an Ort und Stelle gebracht wird, daß das Bindemittel dank der Einspritzvorrichtung (10) eingespritzt wird, daß die Einspritzvorrichtung (10) aus der Hülse (8) herausgezogen wird, nachdem das Bindemittel zu wirken beginnt, und daß das Herausziehen des Rohres nach definitiver Wirkung des Bindemittels nachträglich vorgenommen wird.

4. Herausziehverfahren nach einem der Ansprüche 1, 2 oder 3, dadurch gekennzeichnet, daß das Bindemittel ein Kleber wie beispielsweise ein anaerober Kleber ist.

5. Herausziehverfahren nach Anspruch 1, dadurch gekennzeichnet, daß das Bindemittel auf der Außenfläche der Hülse (8) vor dessen Einführen in das Rohr (3) angeordnet wird.

6. Herausziehverfahren nach Anspruch 5, dadurch gekennzeichnet, daß das Bindemittel in Vertiefungen (42) angeordnet wird, die in der Außenoberfläche der Hülse (48) ausgebildet sind, und daß dieses Bindemittel zwischen dem Rohr (3) und der Hülse (48) durch Aufheizen dieser Hülse (48) eingeführt wird.

7. Herausziehverfahren nach Anspruch 5, dadurch gekennzeichnet, daß das Bindemittel zwischen die Hülse (58) und das Rohr (3) durch einen von innen auf die Hülse (58) ausgeübten Druck aufgebracht wird.

8. Vorrichtung zum Herausziehen eines Abschnitts eines Wärmerohres aus einer rohrförmigen Platte (1), in der das Rohr durch Versicken festgelegt ist, derart, daß es auf einer Seite (1a) mit der rohrförmigen Platte (1) fluchtet und daß es bezüglich der anderen Seite (1b) vorspringt, wobei der herauszuziehende Rohrabschnitt einer Durchgangszone entspricht, zwischen dem beim Versicken gewalzten Bereich und dem nichtgewalzten Bereich des Rohres, der vorher von dem Rest des Rohres (3) durch Abschneiden getrennt wurde, dadurch gekennzeichnet, daß sie eine Hülse (8, 48, 58) von einem Durchmesser aufweist, der geringer ist als der Innendurchmesser des Rohres (3) und eine Länge aufweist, die größer ist als die Dicke der rohrförmigen Platte (1), Einrichtungen (10, 42, 49, 51, 52, 54) aufweist, um die Verbindung mittels eines Bindemittels zwischen der Hülse (8) und dem Rohr (3) in zwei Zonen zu erzeugen, die auf beiden Seiten der Durchgangszone des Rohres angeordnet sind und eine Herausziehvorrichtung (60) aufweist, die mit einem der Enden der Hülse (8) verbunden ist.

9. Herausziehvorrichtung nach Anspruch 8, dadurch gekennzeichnet, daß die Hülse (8) an seiner Außenfläche mit Dichtungsverbindungen (11, 12, 13, 14) versehen ist und mit Öffnungen (25, 27) durchsetzt ist, die entsprechend zwischen zwei Verbindungen (11, 12) bzw. (13, 14) angeordnet sind, und daß die Vorrichtung (10), die erlaubt, die Verbindung zwischen der Hülse (8) und dem Rohr (3) sicherzustellen, eine Einspritzvorrichtung (10) des Bindemittels ist, die Einspritzöffnungen (24, 26) aufweist, die derart angeordnet sind, um sich zwischen den Verbindungspaaren (11, 12 - 13, 14) auf der Höhe der Öffnungen (25, 27) der Hülse (8) zu platzieren, wenn diese Vorrichtung (10) in die Hülse in Betriebsstellung gebracht wird.

10. Herausziehvorrichtung nach Anspruch 9, dadurch gekennzeichnet, daß die Einspritzvorrichtung (10) eine zentrale Bohrung (20) aufweist, die zwei Vorratskammern von Bindemittel (21, 23) bildet, und mit den Einspritzöffnungen (24, 26) in Verbindung steht, sowie eine Stange (35) aufweist, die gleitbeweglich in der Bohrung (20) angeordnet ist, und zwei Einspritzkolben (36, 37) bildet, die im Inneren der Vorratskammern des Bindemittels (21, 23) beweglich sind.

11. Herausziehvorrichtung nach einem der Ansprüche 9 oder 10, dadurch gekennzeichnet, daß die Herauszieheinrichtung (60) an sich eine zentrale Bohrung von einem Durchmesser aufweist, der ausreicht, um das Hindurchbewegen der Einspritzvorrichtung (10) zu ermöglichen.

12. Herausziehvorrichtung nach einem der Ansprüche 8 bis 11, dadurch gekennzeichnet, daß die Herauszieheinrichtung (60) an sich einen äußeren Überzug (61) aufweist, der Kerben (62) aufweist, die regelmäßig beabstandet in axialer Richtung auf seiner Innenfläche angeordnet sind und einen hydraulischen Stelltrieb aufweist, der im Inneren der Hülle (61) angeordnet ist und einen Körper (63) aufweist, der mit Blockierungshacken (69) in den Kerben (62) der Hülle (61) versehen ist, und einen Kolben (64) aufweist, der mit der Hülse (8) an einer ihrer Enden verbunden ist und mit Blockierunghacken (71) in den Kerben (62) der Hülle (61) versehen ist.

13. Herausziehvorrichtung nach Anspruch 12, dadurch gekennzeichnet, daß der Stelltrieb (63, 64) in einer Richtung wirkt, und daß eine Feder (68) zwischen dem Ende der Hülse (8), mit dem der Kolben (64) verbunden ist und dem Körper (63) für das Zurückholen des Körpers (63) eingebracht ist, nach jedem Herausziehen des Rohres (3) um einen Schritt, entsprechend dem axialen Abstand, der zwei aufeinanderfolgende Kerben (62) trennt.

14. Herausziehvorrichtung nach Anspruch 12, dadurch gekennzeichnet, daß der Stelltrieb (63, 64) in zwei Richtungen wirkt, wobei die Speisung der Kammern (90, 91) dieses Stelltriebs in eine Richtung das Zurückholen des Körpers (63) nach dem Herausziehen des Rohres (3) um einen Schritt erlaubt.

**Claims**

1. Process for extracting a heat-exchanger tube section (3) to be inspected from a tube plate (1) in which the tube is fixed by setting so that it is flush with one face (1a) of the tube plate forming the entry face thereof and projects relative to the other face (1b) or the exit face of the tube plate which is contact with the inside of the steam generator, the tube section (3) to be extracted, previously separated from the remaining tube by being cut off, having at least one transitional zone (4) between the part rolled at the time of setting and the unrolled part of the tube positioned near the exit face of the tube plate and where an inspection is carried out after extraction, characterized in that a sleeve (8) is pushed into the tube (3) from the face (1a) of the tube plate with which the tube (3) is flush and over such a length that the sleeve (8) covers the tube (3) through the entire length of the tube plate (1) and over the entire zone (4) to be inspected, in that the tube (3) and the sleeve (8) are joined together in two zones (15, 16) located on either side of the zone (4) to be inspected, by means of a binder which ensures a bond of high mechanical strength and which is introduced between the inner surface of the tube (3) and the outer surface of the sleeve (8), and in that an axial pull is exerted on the sleeve (8) from the face (1a) of the tube plate (1) with which the tube (3) is flush, in order to extract the tube section (3) from the tube plate (1).

2. Extraction process according to claim 1, characterized in that the binder is injected, after the sleeve (8) has been pushed into the tube (3), into the two zones (15, 16) between the inner surface of the tube (3) and the outer surface of the sleeve (8), and in that the tube (3) is extracted by pulling on the sleeve (8) after the time required for the binder to set.

3. Extraction process according to claim 2, characterized in that a binder injection device (10) is inserted into the sleeve (8), in that the sleeve (8) is positioned in the tube (3), in that the binder is injected by means of the injection device (10), in that the injection device (10) is extracted from the sleeve (8) after the binder has started to set, and in that the tube is subsequently extracted after the binder has set completely.

4. Extraction process according to any one of claims 1, 2 and 3, characterized in that the binder is a glue, such as an anaerobic glue.

5. Extraction process according to claim 1, characterized in that the binder is applied to the outer surface of the sleeve (8) before the latter is inserted into the tube (3).

6. Extraction process according to claim 5, characterized in that the binder is arranged in cavities (42) formed in the outer surface of the sleeve (48), and in that this binder is injected between the tube (3) and the sleeve (48) by heating said sleeve (48).

7. Extraction process according to claim 5, characterized in that the binder is applied between the sleeve (58) and the tube (3) by pressure exerted on the sleeve (58) from the inside.

8. Device for extracting a heat-exchanger tube section from a tube plate (1), in which the tube is fixed by setting so that it is flush with one face (1a) of a tube plate (1) and projects relative to the other face (1b), the tube section to be extracted which corresponds to a transitional zone between the part rolled at the time of setting and the unrolled part of the tube being previously separated from the remaining tube (3) by being cut off, characterized in that it comprises a sleeve (8, 48, 58) of à diameter less than the inside diameter of the tube (3) and of a length greater than that the thickness of the tube plate (1), means (10, 42, 49, 51, 52, 54) for joining the sleeve (8) and the tube (3) together, by means of a binder, in the two zones positioned on either side of the transitional zone of the tube, and an extraction device (60) connected with one of the ends of the sleeve (8).

9. Extraction device according to claim 8, characterized in that the sleeve (8) is provided on its outer surface with gaskets (11, 12, 13, 14) and is pierced with apertures (25, 27) arranged respectively between two gaskets (11, 12) and (13, 14), and in that the device (10) enabling the bond to be made between the sleeve (8) and the tube (3) is a binder injection device (10) having injection apertures (24, 26) arranged so as to position themselves between the pairs of gaskets (11, 12 - 13, 14) in the region of the apertures (25, 27) in the sleeve (8), when this device (10) is inserted into the sleeve in the operating position.

10. Extraction device according to claim 9, characterized in that the injection device (10) has aentral bore (20) forming two binder storage chambers (21, 23) and communicating with the injection apertures (24, 26), and a rod (35) mounted slideably in the bore (20) and forming two injection pistons (36, 37) movable inside the binder storage chambers (21, 23).

11. Extraction device according to either one of claims 9 and 10, characterized in that the actual extraction means (60) has a central bore of sufficient diameter to allow the passage of the injection device (10).

12. Extraction device according to any one of claims 8 to 11, characterized in that the actual extraction means (60) comprises an outer casing (61) having grooves (62) spaced uniformly on its inner surface in the axial direction, and a hydraulic jack located inside the casing (61) and having a body (63) equipped with pawls (69) locking in the grooves (62) of the casing (61) and a piston (64) connected with the sleeve (8) at one of its ends and equipped with pawls (71) locking in the grooves (62) of the sleeve (61).

13. Extraction device according to claim 12, characterized in that the jack (63, 64) is single-acting, and that a spring (68) is inserted between the end of the sleeve (8) to which the piston (64) is connected and the body (63), in order to return the body (63) after each extraction of the tube (3) by one step, corresponding to the axial distance separating two successive grooves (62).

14. Extraction device according to claim 12, characterized in that the jack (63, 64) is double-acting, the supply of the chambers (90, 91) of this jack in one direction making it possible to return the body (63) after the extraction of the tube (3) by one step.

FIG.1    FIG.1a

FIG.2a

FIG.2b

FIG.3a

FIG.3b

FIG.4

FIG.4a

FIG.5

FIG.6a

FIG.6b

FIG.6c

FIG.6d

FIG.6e

FIG.6f

EP 0 227 535 B1